# EUROPEAN PATENT SPECIFICATION

(11) **EP 3 415 315 B1**
(45) Date of publication and mention of the grant of the patent: **11.09.2024**
(21) Application number: 18176942.3
(22) Date of filing: 11.06.2018
(51) Int. Cl.: B29C 64/112, B33Y 10/00, B33Y 30/00, B29C 64/264, B29C 35/08

(54) **BUILDING APPARATUS AND BUILDING METHOD**
BAUVORRICHTUNG UND BAUVERFAHREN
APPAREIL ET PROCÉDÉ DE CONSTRUCTION

(30) Priority: 12.06.2017 JP 2017114821
(43) Date of publication of application: 19.12.2018
(73) Proprietor: Mimaki Engineering Co., Ltd., Tomi-City, Nagano 389-0512 (JP)
(72) Inventor: OCHI, Kazuhiro, Tomi-city, Nagano 389-0512 (JP); OKAWA, Masakatsu, Tomi-city, Nagano 389-0512 (JP); MARUYAMA, Kyohei, Tomi-city, Nagano 389-0512 (JP)
(74) Representative: Horn Kleimann Waitzhofer Schmid-Dreyer Patent- und Rechtsanwälte PartG mbB

(56) References cited:
- US-A1- 2015 093 544
- US-B2- 7 270 528

## Description

### BACKGROUND OF THE INVENTION

### TECHNICAL FIELD

The present invention relates to a building apparatus and a building method.

### BACKGROUND ART

In the related art, there is known a building apparatus (3D printer) that builds an object using an ink-jet head. With such a building apparatus, for example, the object is built by additive manufacturing by depositing a plurality of layers of ink formed by the ink-jet head. In this case, as the ink, for example, used is UV curable ink that is cured by being irradiated with ultraviolet rays. As a light source that irradiates the UV curable ink with ultraviolet rays, for example, an ultraviolet LED (UV LED) is used.

Document US7270528B2 discloses, according to its abstract, a flash curing system for solid freeform fabrication which generates a plurality of radiation emitting pulses that forms a planar flash. The planar flash initiates curing of a curable material dispensed by a solid freeform fabrication apparatus. The radiation emitting pulses have a high peak power value that releases a sufficient quantity of free radicals from the photoinitiator to initiate curing and overcome the problem of oxygen inhibition. Substantially less power is consumed and less heat generated by the flash curing system compared to conventional continuous emission curing systems.

Document US2015093544A1 discloses, according to its abstract, a method for printing a three-dimensional structure with a smooth surface comprising the following steps of depositing multiple droplets of printing material at least partially side by side and one above the other and curing the deposited droplets by light irradiation to build up a three-dimensional pre-structure in a first step, and smoothing at least one surface of the three-dimensional pre-structure by targeted placement of compensation droplets in boundary areas of adjacent deposited droplets and/or in edges of the surface to be smoothed in a second step to build up the three-dimensional structure with a smooth surface.

### SUMMARY

In a case of building an object by additive manufacturing, the object needs to be formed by depositing a large number of layers of ink. In this case, it is desirable that the respective layers of ink are formed with high accuracy not to cause misalignment and the like with respect to upper and lower layers. In a case of performing building by using UV curable ink, it is desirable that the entire layers of the ink formed with the UV curable ink are cured more uniformly and appropriately to form the layers of the ink with high accuracy. The present invention provides a building apparatus and a building method that can solve the above problems.

The inventors of the present invention have investigated a method of curing the layers of the ink constituting the object more uniformly and appropriately. In this investigation, first, a case in which a cured state is nonuniform is focused on.

More specifically, for example, the inventors of the present invention have performed an experiment of forming layers of ink corresponding to the layers of the ink constituting the object on a sheet-like medium to be irradiated with ultraviolet rays under various conditions, and checked a change and the like of a curing manner. Additionally, inventors have performed various experiments, examination, and the like, and found that creases may be generated on a surface of a cured layer of the ink depending on an irradiation condition of the ultraviolet rays. When such creases are generated on the surface of the ink, for example, flatness of the surface of the layer of the ink is deteriorated. As a result, a layer of the ink to be further formed thereon may be influenced, and accuracy in building may be deteriorated.

To cure the UV curable ink, ultraviolet rays equal to or larger than a predetermined integrated amount of light (total integrated amount of light) need to be emitted to respective positions of the layer of the ink. On the other hand, a light source (a UV LED and the like) that generates ultraviolet rays generates a large amount of heat in accordance with generation of ultraviolet rays. In this case, if a supply amount of electric power to the light source is increased to enhance luminous intensity of the light source, a problem of overheating of the light source is caused. Thus, in a conventional configuration using UV curable ink, typically, a supply amount of electric power to the light source of ultraviolet rays is set to suppress luminous intensity of light to be in a range in which ultraviolet rays equal to or larger than a predetermined integrated amount of light can be emitted and overheating of the light source is not caused.

On the other hand, upon further investigation, the inventors of the present invention found that, to prevent the creases as described above from being generated and cure the layer of the ink more appropriately, it is preferable not only to consider an integrated amount of ultraviolet rays but also to emit ultraviolet rays having sufficiently large intensity of light emission (for example, luminous intensity) of the light source of ultraviolet rays. However, as described above, the light source such as the UV LED generates a large amount of heat at the time of light emission. Thus, when a supply amount of electric power is increased to cause the light source to emit strong ultraviolet rays, the temperature may be increased to exceed a temperature in an operation range of the light source (for example, a rated upper limit temperature).

On the other hand, upon further investigation, the inventors of the present invention found that the creases can be prevented from being generated by emitting strong ultraviolet rays in a pulse-like form without continuously emitting strong ultraviolet rays. That is, the inventors found that it is important to enhance peak luminous intensity of ultraviolet rays instead of continuous luminous intensity. In a case of emitting strong ultraviolet rays in a pulse-like form, lighting time with peak luminous intensity is shortened, so that an average power supply amount can be appropriately suppressed even when the power supply amount is increased at the time of peak luminous intensity. Due to this, overheating of the light source can be appropriately prevented.

Thus, with this configuration, for example, strong ultraviolet rays can be appropriately emitted while the light source is prevented from overheating. Due to this, for example, the creases can be appropriately prevented from being generated on the surface of the layer of the ink. At the time of building the object, the entire layers of the ink to be deposited can be cured more uniformly and appropriately, and formed with higher accuracy.

That is, to solve the above problems, the present invention provides a building apparatus according to claim 1, that builds an object using a curable material that is cured by being irradiated with ultraviolet rays, the building apparatus including: an ejection head, configured to eject the curable material; a UV light source, configured to emit ultraviolet rays to the curable material ejected from the ejection head; and a light source driver, configured to supply electric power for driving the UV light source, wherein the UV light source is a UV LED, and the light source driver supplies the electric power that varies in a pulse-like form to the UV light source to drive the UV light source using a pulse driving scheme.

The building apparatus builds the object, for example, by additive manufacturing. As a UV light source, a UV LED can be preferably used. The ejection head ejects, for example, droplets of a material using an ink-jet scheme. As a curable material for building, for example, UV curable ink can be preferably used. The building apparatus includes a plurality of ejection heads each ejecting the curable material with different color.

With this configuration, for example, by supplying electric power that is changed in a pulse-like form to the light source driver, a large amount of electric power can be appropriately supplied to the UV light source at a timing of lighting while overheating of the UV light source is suppressed. Due to this, for example, the UV light source can be caused to appropriately emit strong ultraviolet rays. By causing the UV light source to emit strong ultraviolet rays, for example, creases can be prevented from being generated on the surface and a layer of curable material for building can be cured more uniformly and appropriately. Due to this, the object can be appropriately built with high accuracy.

The light source driver supplies electric power to the UV light source so that the temperature of the UV light source does not exceed the rated upper limit temperature. More specifically, for example, it is preferable to supply electric power to the UV light source so that the temperature of the UV light source does not exceed 80°C.

In this configuration, for example, the ejection head ejects the material based on at least data indicating the shape of the object. The UV light source irradiates, with ultraviolet rays, at least the entire surface of a region to which the material is ejected by the ejection head. In this case, "irradiates, with ultraviolet rays, the entire surface of the region" means, for example, that ultraviolet rays are successively emitted to respective positions on the entire surface of the region by performing scanning operation and the like for changing irradiation position while ultraviolet rays are emitted to part of the region. The light source driver drives, for example, the UV light source using a pulse driving scheme (PWM scheme) for performing pulse width modulation. The light source driver may drive, for example, the UV light source using a pulse driving scheme (PNM scheme) for performing pulse number modulation.

The present invention also provides a building method according to claim 9. Also in this case, for example, the same effect as described above can be obtained.

According to the present invention, for example, at the time of building the object, the layer of the curable material for building can be cured more uniformly and appropriately.

### BRIEF DESCRIPTION OF THE DRAWINGS

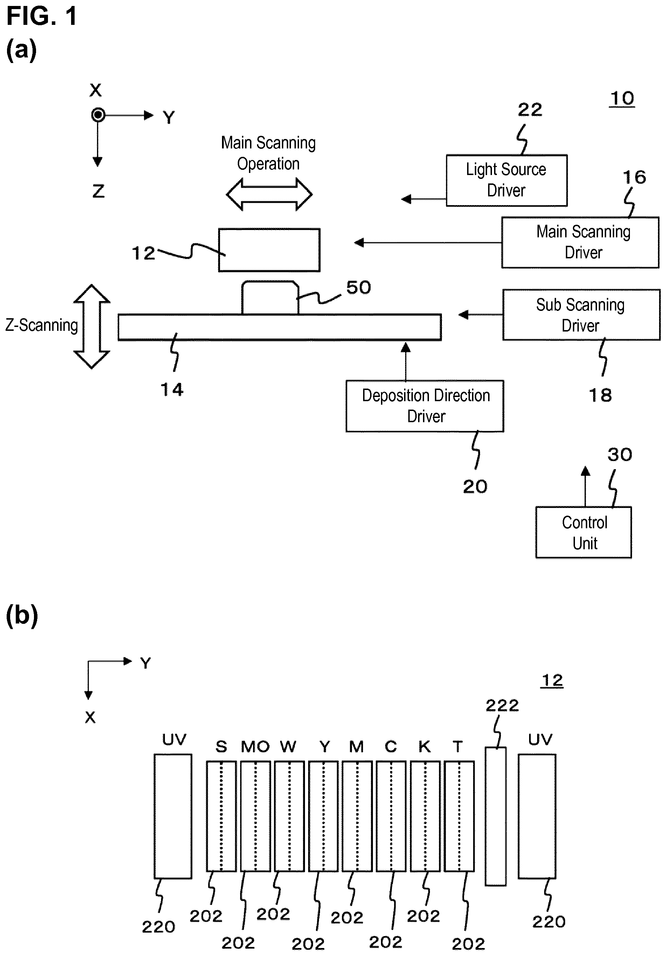

FIG. 1 is a diagram illustrating an example of a building apparatus 10 according to an embodiment of the present invention, FIG. 1A illustrates a configuration example of a principal part of the building apparatus 10, and FIG. 1B illustrates a more specific configuration example of a head 12.

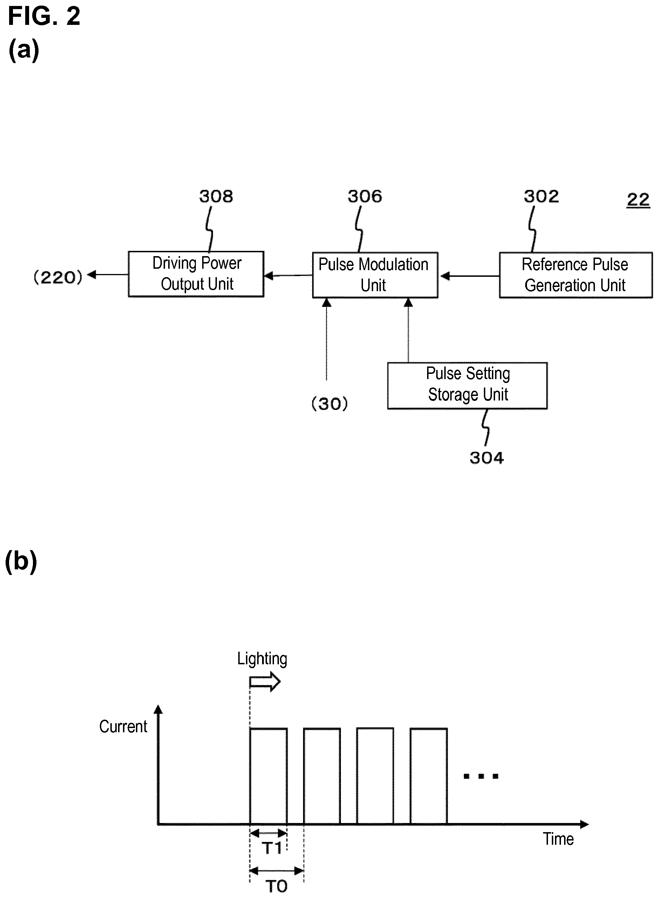

FIG. 2 is a diagram for explaining an operation of driving a UV light source 220 by a light source driver 22, FIG. 2A illustrates a specific configuration example of the light source driver 22, and FIG. 2B illustrates an example of pulse-like electric power supplied to the UV light source 220 by the light source driver 22.

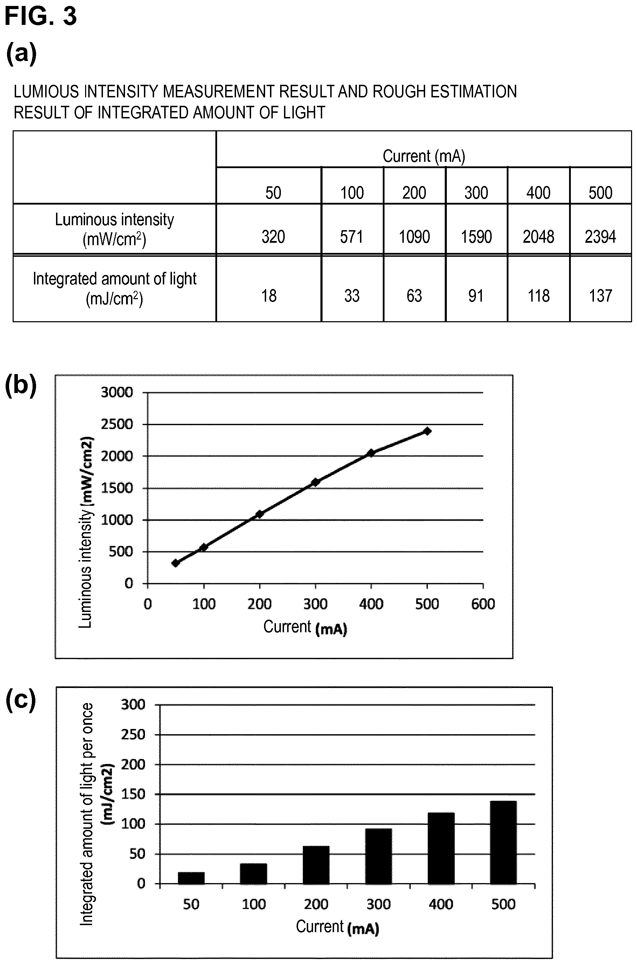

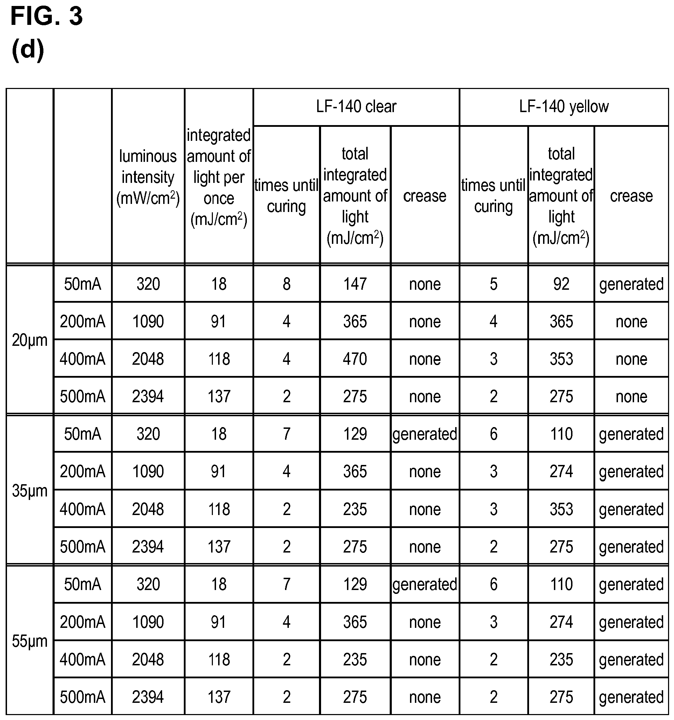

FIG. 3 is a diagram illustrating an experiment result in a case of causing a UV LED corresponding to the UV light source to be continuously lit, FIG. 3A illustrates a luminous intensity measurement result and a rough estimation result of an integrated amount of light, FIG. 3B illustrates a relation between a current supplied to the UV LED and luminous intensity, FIG. 3C illustrates a relation between the current supplied to the UV LED and an integrated amount of light per once, and FIG. 3D illustrates a correspondence between a condition for emitting ultraviolet rays and generation of creases.

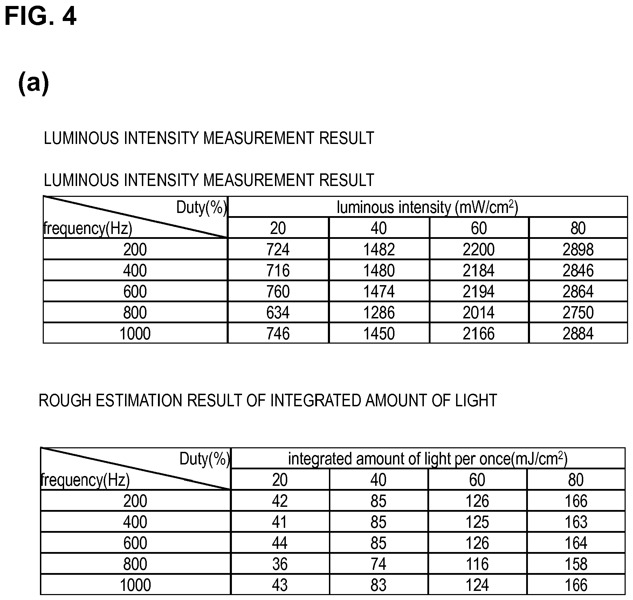

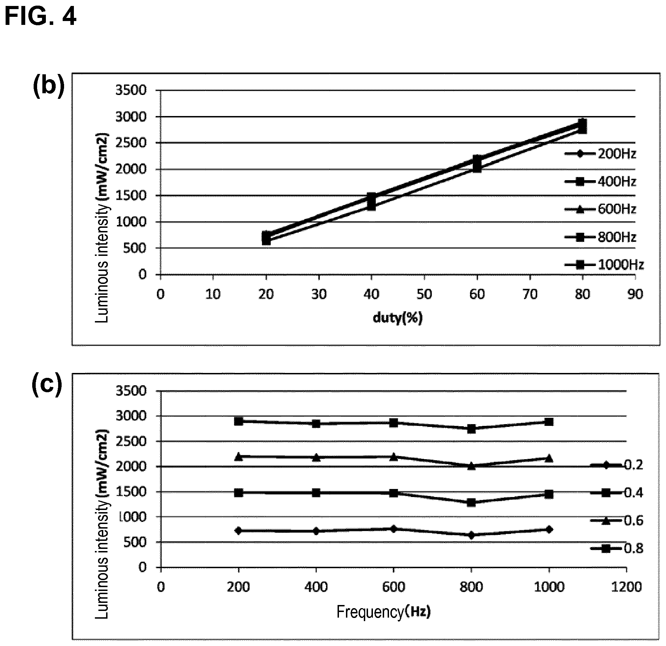

FIG. 4 is a diagram illustrating an experiment result in a case of emitting ultraviolet rays while causing a peak value of a pulse current to be 700 mA, FIG. 4A illustrates a measurement result of luminous intensity and a rough estimation result of an integrated amount of light in a case in which duty and a frequency in pulse driving are variously changed, FIG. 4B is a graph illustrating a relation between the duty and the luminous intensity, and FIG. 4C is a graph illustrating a relation between the frequency and the luminous intensity.

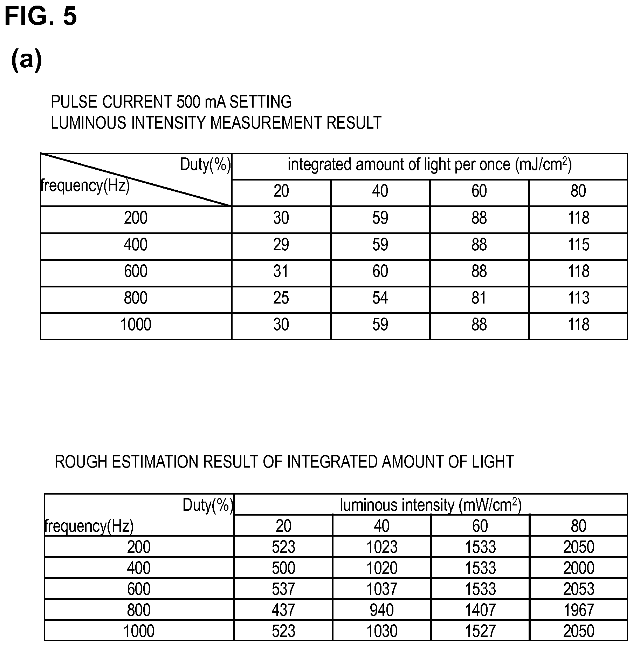

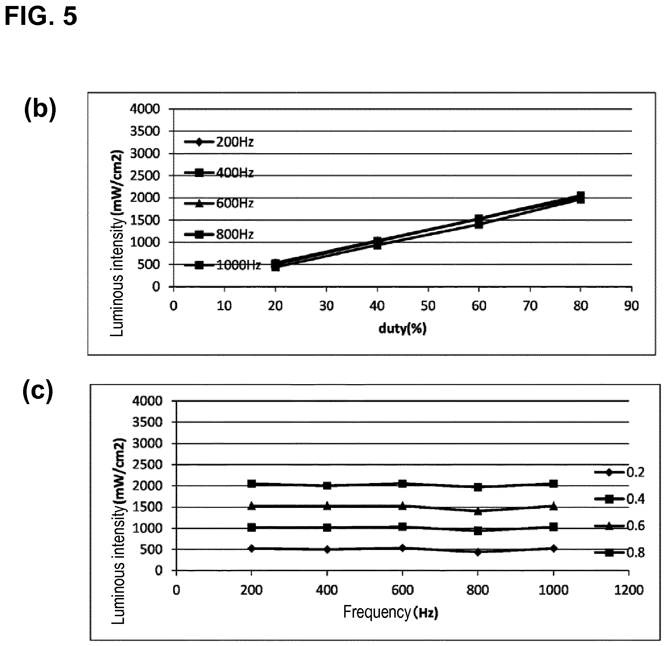

FIG. 5 is a diagram illustrating an experiment result in a case of emitting ultraviolet rays while causing a peak value of the pulse current to be 500 mA, FIG. 5A illustrates a measurement result of luminous intensity and a rough estimation result of an integrated amount of light in a case in which duty and a frequency in pulse driving are variously changed, FIG. 5B is a graph illustrating a relation between the duty and the luminous intensity, and FIG. 5C is a graph illustrating a relation between the frequency and the luminous intensity.

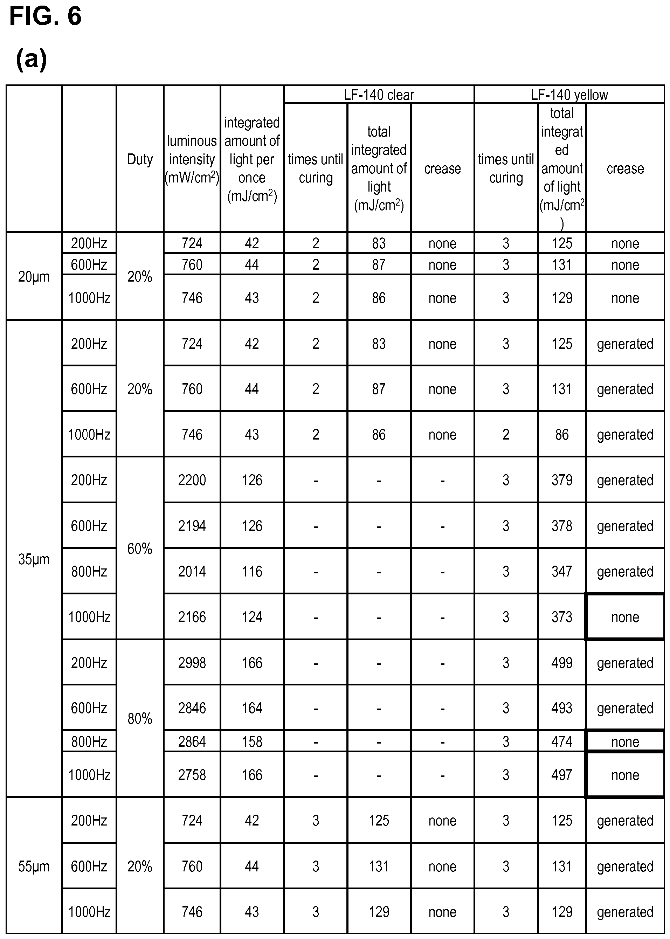

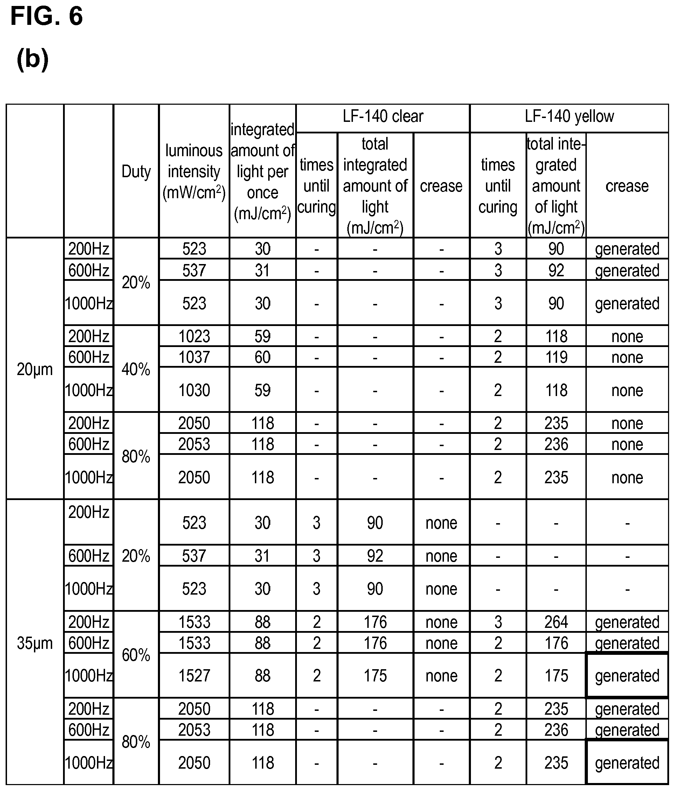

FIG. 6 is a diagram illustrating a correspondence between a condition for emitting ultraviolet rays and generation of creases, FIG. 6A illustrates an experiment result in a case in which the peak value of the pulse current is caused to be 700 mA, and FIG. 6B illustrates an experiment result in a case in which the peak value of the pulse current is caused to be 500 mA.

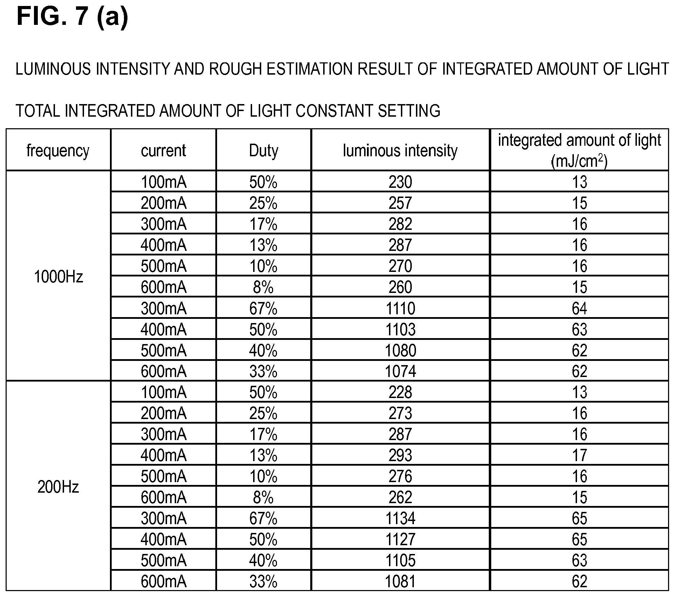

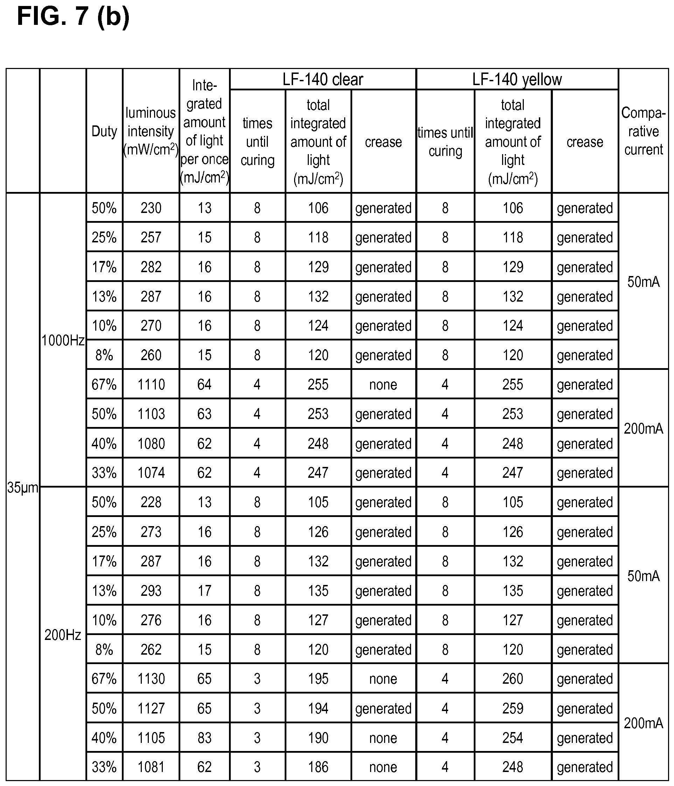

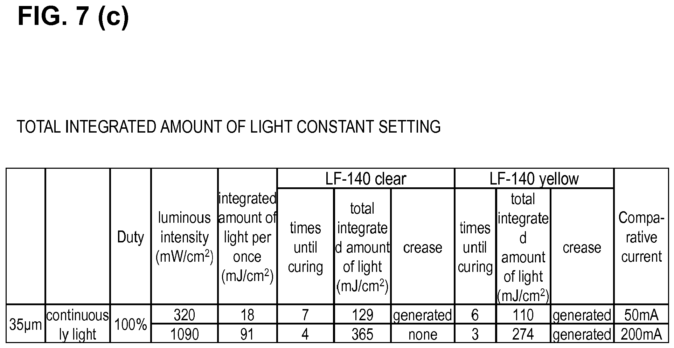

FIG. 7 is a diagram illustrating experiment results under various conditions so that comparison can be performed by aligning rough estimation results of the integrated amount of light.

### DESCRIPTION OF EMBODIMENTS

The following describes an embodiment according to the present invention with reference to the drawings. FIG. 1 illustrates an example of a building apparatus 10 according to the embodiment of the present invention. FIG. 1A illustrates a configuration example of a principal part of the building apparatus 10.

In this example, the building apparatus 10 is an apparatus that builds an object 50 by additive manufacturing using a curable material to be cured by being irradiated with ultraviolet rays. In this case, the additive manufacturing is, for example, a method of building the object 50 by depositing a plurality of layers. More specifically, in this example, the building apparatus 10 builds, for example, the object by additive manufacturing by depositing a plurality of layers of the curable material cured with ultraviolet rays emitted from a UV light source. The object 50 is, for example, a three-dimensional structure.

Except the points described below, the building apparatus 10 may have a configuration that is the same as or similar to that of a known building apparatus. More specifically, except the points described below, the building apparatus 10 may have, for example, a configuration that is the same as or similar to that of a known building apparatus that performs building by ejecting droplets (ink droplets) to be a material of the object 50 from an ink-jet head. In addition to the illustrated configuration, the building apparatus 10 may further include, for example, various configurations required for building, coloring, and the like of the object 50.

In this example, the building apparatus 10 includes a head 12, a stage 14, a main scanning driver 16, a sub scanning driver 18, a deposition direction driver 20, a light source driver 22, and a control unit 30. The head 12 is a portion that ejects droplets to be a material of the object 50, ejects ink droplets of ink to be cured in accordance with a predetermined condition, and causes the ink droplets to be cured to deposit respective layers constituting the object 50 to be formed. In this example, as the ink, used is UV curable ink to be cured by being irradiated with ultraviolet rays. In this case, the UV curable ink is an example of a curable material cured by being irradiated with ultraviolet rays. The ink is, for example, liquid ejected from the ink-jet head. The ink-jet head is, for example, an ejection head that ejects droplets using an ink-jet scheme. In this example, the head 12 includes at least a plurality of ink-jet heads and a UV light source. A more specific configuration of the head 12 will be described later in detail.

The stage 14 is a table-like member that supports the object 50 being built, arranged at a position opposed to the ink-jet head in the head 12, and has an upper surface on which the object 50 being built is placed. In this example, at least the upper surface of the stage 14 has a configuration that can be moved in the deposition direction (the Z-direction in the drawing), and when the stage 14 is driven by the deposition direction driver 20, at least the upper surface is moved in accordance with progress of the building of the object 50. In this case, the deposition direction means, for example, a direction in which a curable material for building is deposited in additive manufacturing. More specifically, in this example, the deposition direction is a direction orthogonal to a main scanning direction (the Y-direction in the drawing) and a sub scanning direction (the X-direction in the drawing) set in advance.

The main scanning driver 16 is a driver that causes the head 12 to perform a main scanning operation (Y-scanning). In this case, "causes the head 12 to perform a main scanning operation" means, for example, to cause the ink-jet head included in the head 12 to perform the main scanning operation. The main scanning operation means an operation of ejecting ink droplets while moving in the main scanning direction, for example.

In this example, the main scanning driver 16 causes the head 12 to move while fixing the position of the stage 14 in the main scanning direction, and causes the head 12 to perform the main scanning operation. The main scanning driver 16 causes the head 12 to perform the main scanning operation in a reciprocative manner. In this case, "causes the head 12 to perform the main scanning operation in a reciprocative manner" means, for example, to cause the head 12 to perform the main scanning operation of moving the head 12 in one direction in the main scanning direction and the main scanning operation of moving the head 12 in the other direction. Movement of the head 12 in the main scanning operation may be movement relative to the object 50. Thus, in the modification of the configuration of the building apparatus 10, for example, the object 50 may be moved by moving the stage 14, for example, while fixing the position of the head 12.

The sub scanning driver 18 is a driver that causes the head 12 to perform sub scanning operation (X-scanning). In this case, "causes the head 12 to perform sub scanning operation" means, for example, to cause the ink-jet head included in the head 12 to perform the sub scanning operation. The sub scanning operation means, for example, an operation of moving relatively to the stage 14 in the sub scanning direction orthogonal to the main scanning direction. The sub scanning operation may be an operation of moving relatively to the stage 14 in the sub scanning direction by a feeding amount set in advance.

In this example, the sub scanning driver 18 causes the head 12 to perform the sub scanning operation during intervals in the main scanning operation. In this case, more specifically, for example, the sub scanning driver 18 causes the head 12 to perform the sub scanning operation by moving the stage 14 while fixing the position of the head 12 in the sub scanning direction. The sub scanning driver 18 may cause the head 12 to perform the sub scanning operation by moving the head 12 while fixing the position of the stage 14 in the sub scanning direction.

The deposition direction driver 20 is a driver that causes at least one of the head 12 and the stage 14 to move in the deposition direction (Z-direction). In this case, "causes the head 12 to move in the deposition direction" means, for example, to cause at least the ink-jet head in the head 12 to move in the deposition direction. "Cause the stage 14 to move in the deposition direction" means, for example, to cause the position of at least the upper surface of the stage 14 to move. The deposition direction driver 20 causes at least one of the head 12 and the stage 14 to move in the deposition direction to cause the ink-jet head to perform scanning in the Z-direction (Z-scanning), and causes a distance between head tables to be changed, the distance between head tables being a distance between the ink-jet head in the head 12 and the stage 14. The distance between head tables may be, for example, a distance between a nozzle face of the ink-jet head on which a nozzle is formed and the upper surface of the stage 14.

More specifically, in this example, the deposition direction driver 20 fixes, for example, the position of the head 12 in the deposition direction and causes the stage 14 to move. Due to this, the deposition direction driver 20 adjusts, for example, a distance (gap) between the head 12 and a surface to be built of the object 50 being built. The deposition direction driver 20 may cause the head 12 to move while fixing the position of the stage 14 in the deposition direction.

The light source driver 22 is a driver that supplies electric power for driving the UV light source in the head 12. The light source driver 22 causes, for example, the UV light source to be lit at the time of main scanning operation to cure ink landed on the surface to be built of the object 50. The surface to be built of the object 50 is, for example, a surface on which the next layer of the ink is formed by the head 12. In this example, the light source driver 22 supplies electric power that varies in a pulse-like form to the UV light source to drive the UV light source using a pulse driving scheme. An operation of driving the UV light source by the light source driver 22 will be described later in more detail.

The control unit 30 is, for example, a CPU of the building apparatus 10, and controls the components of the building apparatus 10 to control a building operation performed by the building apparatus 10. The control unit 30 preferably controls the components of the building apparatus 10 based on shape information, color image information, and the like of the object 50 to be built, for example. According to this example, the object 50 can be appropriately built.

Subsequently, the following describes a more specific configuration of the head 12. FIG. 1B illustrates an example of a more specific configuration of the head 12. In this example, the head 12 includes a plurality of ink-jet heads 202, a plurality of UV light sources 220, and a planarizing roller unit 222.

Each of the ink-jet heads 202 is an example of the ejection head, and ejects UV curable ink as the curable material for building using an ink-jet scheme based on at least data indicating the shape of the object 50 to be built. In this case, "the ink-jet head 202 ejects UV curable ink" means, for example, that ink droplets of UV curable ink are ejected from the nozzle of the ink-jet head 202. More specifically, in this example, each of the ink-jet heads 202 ejects ink droplets based on the shape information, the color image information, and the like of the object 50 in accordance with an instruction from the control unit 30. Each of the ink-jet heads 202 has a nozzle array in which a plurality of nozzles are arranged side by side in the sub scanning direction on a surface opposed to the stage 14. Due to this, each of the ink-jet heads 202 ejects ink droplets from each nozzle in the nozzle array toward the stage 14. As the ink-jet head 202, for example, a known ink-jet head can be preferably used.

In the head 12 according to this example, the ink-jet heads 202 are arranged side by side in the main scanning direction (Y-direction) while positions thereof in the sub scanning direction (X-direction) are aligned. The ink-jet heads 202 each eject UV curable ink of different color. The head 12 includes, as the ink-jet heads 202, for example, a plurality of ink-jet heads 202 for coloring, the ink-jet head 202 for a curable material for building, the ink-jet head 202 for white ink, the ink-jet head 202 for clear ink, and the ink-jet head 202 for a support material.

More specifically, in this example, the ink-jet heads 202 include, as a plurality of ink-jet heads 202 for coloring, ink-jet heads for ink of respective colors, that is, yellow (Y), magenta (M), cyan (C), and black (K). As the ink-jet head 202 for a curable material for building, the ink-jet heads 202 include an ink-jet head for ink for building (model material MO) of predetermined color. As the ink-jet heads 202 for white ink and clear ink, the ink-jet heads 202 include ink-jet heads for ink of white (W) and for ink of clear color as colorless transparent color (T) (clear ink). As the ink-jet head 202 for a support material, the ink-jet heads 202 include an ink-jet head for ink (S) to be a material of support layer.

The support layer is, for example, a deposition structure that surrounds an outer circumference of the object 50 being built to support the object 50. The support layer is formed as needed at the time of building the object 50, and removed after the building is completed. As the material of the support layer, it is preferable to use a water-soluble material that can be dissolved in water after the object 50 is built. In this case, it is preferable to use a material having a cure degree with ultraviolet rays weaker than that of the material constituting the object 50, the material to be easily decomposable.

Arrangement of the ink-jet heads 202 in the head 12, types of the ink-jet heads 202 included in the head 12, and the like are not limited to the configuration illustrated in the drawing, and may be variously changed. For example, some of the ink-jet heads may be arranged being shifted from the positions of the other ink-jet heads in the sub scanning direction. The head 12 may further include, for example, ink-jet heads for a pale color of each color, red (R), green (G), blue (B), orange, and the like.

The UV light sources 220 are curing modules for curing the ink, and cure the UV curable ink by irradiating the UV curable ink ejected from the ink-jet head 202 with ultraviolet rays. In this example, the UV light source 220 is an ultraviolet LED (UV LED). In this case, "the UV light source 220 is a UV LED" means, for example, that the UV LED is used as an element that generates ultraviolet rays in the UV light source 220.

In this example, the respective UV light sources 220 are arranged at one end side and the other end side in the main scanning direction of the head 12 across a row of the ink-jet heads. Due to this, the UV light source 220 irradiates ink of ultraviolet irradiation type ejected from each ink-jet head 202 with ultraviolet rays while moving together with the ink-jet heads 202 at the time of main scanning operation.

In this case, in each main scanning operation, for example, ultraviolet rays are emitted to the UV curable ink ejected in the main scanning operation at that time by the UV light source 220 on a rear side of the ink-jet heads 202 in a movement direction of the main scanning operation. Due to this, the UV light source 220 at least irradiates, with ultraviolet rays, the entire surface of the region to which the UV curable ink is ejected from the ink-jet head 202 in the head 12. In this case, "irradiates, with ultraviolet rays, the entire surface of the region" may mean, for example, to successively emit ultraviolet rays to each position of the entire surface of the region by emitting ultraviolet rays while moving in the main scanning direction at the time of main scanning operation to change the irradiation position while irradiating part of the region with ultraviolet rays. With this configuration, for example, the UV curable ink ejected in the main scanning operation at each time can be appropriately cured.

In this example, the UV light source 220 emits ultraviolet rays in accordance with pulse-like electric power supplied from the light source driver 22. Due to this, the UV light source 220 emits ultraviolet rays through pulse-like lighting such that emission and turning off of strong ultraviolet rays are periodically repeated.

The planarizing roller unit 222 is a planarizing module for planarizing the layer of the ink formed when the object 50 is being built. In this example, the planarizing roller unit 222 is arranged between the row of ink-jet heads and the UV light source 220. Accordingly, the planarizing roller unit 222 is arranged side by side with the row of ink-jet heads in the main scanning direction while aligning the positions thereof in the sub scanning direction. More specifically, the planarizing roller unit 222 includes, for example, at least a planarizing roller. In this case, the planarizing roller planarizes the layer of the ink by being brought into contact with the surface of the layer of the ink and removing part of the ink before curing at the time of main scanning operation, for example.

As illustrated in the drawing, in this example, the head 12 includes only one planarizing roller unit 222. In this case, the planarizing roller unit 222 is arranged, for example, between the UV light source 220 at one end side of the head 12 and the row of the ink-jet heads. At the time of main scanning operation in which the head 12 moves in an orientation such that the planarizing roller unit 222 is on a rear side of the ink-jet heads 202, the planarizing roller unit 222 planarizes the layer of the ink.

Subsequently, the following describes an operation of driving the UV light source 220 by the light source driver 22 in more detail. FIG. 2 is a diagram for explaining the operation of driving the UV light source 220 by the light source driver 22. FIG. 2A illustrates a specific configuration example of the light source driver 22. FIG. 2B illustrates an example of pulse-like electric power supplied to the UV light source 220 by the light source driver 22.

In this example, the light source driver 22 is a driver that drives the UV light source 220 using a pulse driving scheme (PWM scheme) for performing pulse width modulation, and includes a reference pulse generation unit 302, a pulse setting storage unit 304, a pulse modulation unit 306, and a driving power output unit 308. The reference pulse generation unit 302 is a signal generation unit that generates a pulse signal to be used as a reference in driving of the UV light source 220. For example, the reference pulse generation unit 302 generates a pulse signal having a rectangular wave shape that varies at cycles set in advance, and supplies the pulse signal to the pulse modulation unit 306.

The pulse setting storage unit 304 is a storage unit that stores setting for pulse modulation performed by the pulse modulation unit 306. The pulse setting storage unit 304 stores, for example, the setting of pulse modulation to be associated with various parameters and the like set by a user at the time of building. In this case, the various parameters and the like mean, for example, parameters and the like that indicate setting and the like of the building operation. More specifically, the pulse setting storage unit 304 stores, as the setting for pulse modulation, a pulse width that has been modulated in pulse width modulation, for example.

The pulse modulation unit 306 is a signal modulation unit that modulates a reference pulse received from the reference pulse generation unit 302. For example, the pulse modulation unit 306 reads out the setting for pulse modulation from the pulse setting storage unit 304 in accordance with control by the control unit 30, and modulates the reference pulse based on the read-out setting. In this case, the pulse modulation unit 306 receives, from the control unit 30, an instruction indicating various parameters and the like set by the user at the time of building, for example, and reads out the setting corresponding to this instruction from the pulse setting storage unit 304. The pulse width modulation is performed by changing the pulse width of the reference pulse in accordance with the read-out setting. The pulse modulation unit 306 supplies the modulated pulse signal to the driving power output unit 308.

The driving power output unit 308 is an electric power output unit that supplies electric power for driving the UV light source 220 to the UV light source 220. In this example, the driving power output unit 308 drives the UV light source 220 using a pulse driving scheme by supplying, to the UV light source 220, pulse-like electric power the current value of which varies in synchronization with a pulse signal after pulse width modulation received from the pulse modulation unit 306. With this configuration, for example, the UV light source 220 can be appropriately driven using the pulse driving scheme by the light source driver 22.

More specifically, for example, the UV light source 220 supplies, to the UV light source 220, electric power that varies in a pulse-like form as illustrated in FIG. 2B. In this case, a relation between time and a current supplied to the UV light source 220 is such that, as illustrated in the drawing for example, the current value is increased only in a partial period T1 in a cycle T0 of the pulse signal.

More specifically, in this example, the light source driver 22 supplies, to the UV light source 220, a current having a current value that causes the UV light source 220 to be lit with luminous intensity set in advance in the partial period T1 in the cycle T0. In the other period, the current value supplied to the UV light source 220 is caused to be 0 to turn off the UV light source 220. In this case, for example, duty as a ratio of the lighting period T1 to the cycle T0 of the pulse signal is preferably caused to be about 70% (for example, about 50 to 80%), for example.

In a case of performing building by using UV curable ink, for example, when an irradiation amount of ultraviolet rays is insufficient, the layer of the ink may be nonuniformly cured. Thus, to cure the UV curable ink, ultraviolet rays equal to or larger than a predetermined integrated amount of light need to be emitted to each position of the layer of the ink.

In a case of performing building with the building apparatus, a large number of layers of the ink need to be cured. In this case, when much time for emitting ultraviolet rays is secured at the time of forming each layer of the ink, for example, time required for building is significantly increased. Thus, in the building apparatus, for example, it is desired to sufficiently enhance luminous intensity of the light source, and to cure the layer of the ink within short time in a certain degree.

However, the light source (UV LED and the like) that generates ultraviolet rays generates a large amount of heat in accordance with generation of ultraviolet rays. In this case, when a supply amount of electric power to the light source is increased to enhance luminous intensity of the light source, a problem of overheating of the light source may be caused. Thus, with the building apparatus having a conventional configuration, it is difficult to significantly enhance the luminous intensity of the light source because the problem of overheating of the light source.

In this point of view, upon further investigation, for example, the inventors of the present invention found that, in a case of performing building with the building apparatus having a conventional configuration, the layer of the ink tends to be nonuniformly cured depending on a condition for emitting ultraviolet rays. As a result, the inventors found that creases are generated on the surface of the cured layer of the ink in some cases. When such creases are generated, for example, flatness of the surface of the layer of the ink may be deteriorated, or a surface state of the layer of the ink may become nonuniform. As a result, accuracy in building may be lowered.

On the other hand, upon further investigation, the inventors of the present invention found that, to cure the layer of the ink more appropriately while preventing the creases as described above from being generated, it is preferable to emit ultraviolet rays having sufficiently high intensity of light emission (for example, luminous intensity) by the light source of ultraviolet rays, considering not only the integrated amount of ultraviolet rays. The inventors found that, in this case, the creases can be prevented from being generated by emitting strong ultraviolet rays in a pulse-like form without continuously emitting strong ultraviolet rays. That is, the inventors found that it is important to enhance peak luminous intensity of ultraviolet rays instead of continuous luminous intensity. That is, by sufficiently enhancing the peak luminous intensity at the time of lighting, for example, the creases can be appropriately prevented from being generated and the layer of the ink can be uniformly and appropriately cured even in a case of emitting ultraviolet rays by pulse driving instead of continuously emitting ultraviolet rays, for example.

In a case of emitting ultraviolet rays by pulse driving, lighting time with the peak luminous intensity is shortened even if the peak luminous intensity is enhanced, for example, so that an average power supply amount can be appropriately suppressed. Accordingly, with this configuration, for example, overheating of the light source can be appropriately prevented. Thus, with this configuration, for example, strong ultraviolet rays can be appropriately emitted while overheating of the light source is prevented. Due to this, for example, the creases can be appropriately prevented from being generated on the surface of the layer of the ink.

That is, according to this example, for example, the creases can be prevented from being generated on the surface, and the layer of the UV curable ink can be uniformly and appropriately cured. Due to this, the object 50 can be appropriately built with high accuracy.

In this example, the current flowing in the UV LED of the UV light source 220 is preferably set to a value that can emit strong ultraviolet rays and can prevent overheating of the light source by pulse driving. More specifically, in this example, the current value that is caused to flow in the UV LED at the time of lighting can be appropriately increased by causing the pulse driving to be large instead of causing the UV LED to continuously emit ultraviolet rays with a continuous current. In this case, for example, regarding a relation between the rated upper limit temperature of the UV LED in the UV light source 220 and a supply current value for the UV LED, the supply current value is preferably set so that the temperature of the UV LED does not exceed the rated upper limit temperature in a case in which electric power is supplied in a pulse-like form to the UV LED from the light source driver 22, and the temperature of the UV LED would exceed the rated upper limit temperature if the current of the supply current value were continuously supplied to the UV LED. In this case, the rated upper limit temperature of the UV LED means, for example, an upper limit of a rated temperature of the UV LED. The supply current value means, for example, a peak value of the pulse current that flows in the UV LED in accordance with electric power supplied from the light source driver 22.

With this configuration, for example, overheating of the UV LED can be appropriately prevented while a large current is supplied to the UV LED, the large current for causing the UV LED to emit strong ultraviolet rays. Due to this, for example, strong ultraviolet rays can be appropriately emitted while the temperature of the UV light source 220 is prevented from rising to exceed the rated upper limit temperature.

Considering the supply current value for the UV LED in relation to the temperature of the UV LED, it is preferable to set the supply current value to be a value such that the temperature of the UV LED does not exceed 80°C in a case of supplying electric power in a pulse-like form from the light source driver 22 to the UV LED, and the temperature of the UV LED exceeds 80°C when the current of the supply current value is continuously supplied to the UV LED. In this case, the temperature of the UV LED is, for example, a temperature of a portion the temperature of which becomes the highest in the UV LED. More specifically, the temperature of the UV LED may be, for example, a joining temperature (junction temperature) of the UV LED.

In this case, it is preferable to set the supply current value to be a value such that the temperature of the UV LED does not exceed 70°C in a case of supplying electric power in a pulse-like form from the light source driver 22 to the UV LED, and the temperature of the UV LED exceeds 70°C when the current of the supply current value is continuously supplied to the UV LED. For example, in a case in which the temperature of the UV LED is preferably kept to be lower, the temperature as a reference may be set to be 60°C, for example.

The inventors of the present invention also found that, regarding the creases of the layer of the ink that are generated when curing is nonuniformly performed, a generation manner of the creases varies depending on the color of the ink. If the generation manner of the creases varies depending on the color of the ink, for example, the generation manner of the creases may vary depending on the position of the layer of the ink, and the surface state of the layer of the ink may become more nonuniform. As a result, accuracy in building may be further lowered.

Thus, in a case of emitting strong ultraviolet rays by pulse driving as described above, for example, it is preferable to determine a condition for emitting ultraviolet rays corresponding to the ink of a color that causes the creases to be generated most easily. With this configuration, for example, in a case of performing building by using the ink of a plurality of color types, the object can be appropriately built with higher accuracy. More specifically, as described above with reference to FIG. 1B, for example, the inventors of the present invention found that the creases tend to be generated especially with the ink of yellow color, for example, in a case of performing building using the ink of various colors including the ink of colors Y, M, C, and K, and clear ink. Thus, the condition for emitting ultraviolet rays is preferably set to be a condition such that the creases are not generated with the ink of yellow color. Regarding the pulse-like electric power supplied to the UV light source 220, it is preferable to set the cycle T0 and the period T1, the current value to be supplied to the UV light source 220 during the period T1, and the like based on an instruction received from the control unit 30, a setting stored in the pulse setting storage unit 304, and the like in accordance with a characteristic and the like of the UV curable ink to be used.

As described above, in this example, by using the UV LED as the UV light source 220, the configuration more appropriate for the pulse driving scheme is implemented. More specifically, in a case of using a lamp light source and the like (for example, a halogen lamp) other than the UV LED as the light source that generates ultraviolet rays, a service life of the light source is significantly shortened when control is performed by using the pulse driving scheme. In a halogen lamp and the like, response time is long in an operation of turning on and turning off the light, so that it is difficult to perform ON/OFF control like control using the PWM scheme, for example. Thus, in a case of using the halogen lamp and the like, for example, to perform control using the pulse driving scheme, a scale of a control mechanism may be largely increased.

On the other hand, in a case of using the UV LED, the service life of the light source is hardly influenced due to a characteristic of a material and the like even when control is performed using the pulse driving scheme. Thus, for example, cost for replacing the light source and a maintenance frequency can be largely reduced. The response time in the operation of turning on and off the light is sufficiently short, so that control and the like using the PWM scheme can be more appropriately performed without using a large-scale control mechanism and the like.

As described above, in this example, the UV light source 220 can be appropriately driven using the pulse driving scheme, for example. Due to this, for example, luminous intensity of the UV light source 220 at the time of lighting can be appropriately and sufficiently enhanced. Thus, according to this example, creases and the like can be appropriately prevented from being generated on the layer of the ink after curing, for example. Due to this, for example, the object can be more appropriately built with high accuracy.

Subsequently, provided are supplementary explanation of the configuration in this example and explanation of a modification, for example. As described above, through various experiments and the like, the inventors of the present invention found that the creases may be prevented from being generated and the layer of the ink may be more appropriately cured by emitting ultraviolet rays having sufficiently high intensity of light emission (for example, luminous intensity) by the light source of ultraviolet rays, considering not only the integrated amount of ultraviolet rays. This may be because ultraviolet rays can be caused to reach a deep part of the layer of the ink more appropriately, for example, by emitting strong ultraviolet rays, and a curing manner hardly varies between the vicinity of the surface and the inside of the layer of the ink.

As a method of emitting such strong ultraviolet rays, in this example, the current is supplied to the UV LED using the pulse driving scheme as described above. In this case, a state of curing that progresses in the layer of the ink may be different from that in a case of continuously emitting ultraviolet rays. For example, in a case of causing the UV LED to be lit using the pulse driving scheme, a timing at which ultraviolet rays are not emitted is generated at a stage where the ink is not completely cured during the progress of curing of the ink. In this case, for example, a radical and the like may be generated in the ink and curing may progress at the timing when ultraviolet rays are emitted, and generation of the radical and the like may be stopped and progress of curing may be temporarily stopped at the timing when ultraviolet rays are not emitted. In this case, curing progresses in stages, for example, distortion of the ink being cured may be relieved at the timing when ultraviolet rays are not emitted. As a result, the creases may be more hardly generated after curing. Thus, in this example, it can be considered that the creases are more appropriately prevented from being generated by using the pulse driving scheme, for example.

A specific method of pulse driving and the like are not limited to the configuration described above, and can be variously modified. For example, in the above description, mainly described is a case of driving the UV light source 220 (UV LED) using the PWM scheme. However, pulse driving for the UV light source 220 may be performed, for example, using a method such as pulse number modulation (PNM scheme). In this case, the pulse number modulation means, for example, a method of performing pulse driving by changing the number of pulses output per unit time.

In the above description, mainly described is a case of changing the current that is supplied to the UV light source 220 by pulse driving so that an ON state in which the UV light source 220 is turned on and an OFF state in which the UV light source 220 is turned off are repeated. However, at a timing of interval during emission of strong ultraviolet rays, the UV light source 220 may be weakly lit by reducing the current value instead of completely turning off the UV light source 220. In this case, the light source driver 22 supplies, for example, the current to the UV light source 220 so as to repeat supply of a large current for emitting strong ultraviolet rays and supply of a small current for emitting weak ultraviolet rays. Also with this configuration, strong ultraviolet rays can be appropriately emitted by the UV light source 220 while overheating is prevented.

Subsequently, the following describes a result and the like of an experiment performed by the inventors of the present invention. As described above, the inventors of the present invention have performed the experiment of emitting ultraviolet rays under various conditions, and checked a change in a curing manner of the layer of the ink. The inventors have variously examined an experiment result, and made the configuration of this example for causing the UV light source 220 to be lit using the pulse driving scheme based on obtained knowledge. The following describes part of the experiment performed by the inventors of the present invention.

The inventors of the present invention have performed various experiments other than the experiment described below. The inventors have made various examinations including the experiments to achieve the configuration in this example. Thus, a result of the experiment described below can be considered as a result of a reference experiment related to the configuration in this example.

FIGs. 3 to 7 illustrate the result of the experiment performed by the inventors of the present invention. In the following description, performed is an experiment of turning on the UV light source under various conditions to check the curing manner of the ink (pulse curing test).

In this experiment, a layer of the ink corresponding to each layer of the ink constituting the object is formed on a sheet-like medium, ultraviolet rays are emitted thereto under various conditions, and change and the like in a curing manner are checked. More specifically, in this experiment, for convenience of the experiment, ultraviolet rays are emitted using an apparatus for an experiment instead of an actual building apparatus. In this apparatus, after the ink is applied to the medium, the medium is placed on a slider as a device for moving the medium, and ultraviolet rays are emitted from the UV LED while the medium is moved at a position opposed to the UV LED the position of which is fixed. After ultraviolet rays are emitted, whether the ink on the medium is cured is checked. Curing of the ink is checked by touching a sample being measured with a cotton swab, and determining curing is completed when the ink does not spread. By repeating emission of ultraviolet rays and check of curing, the number of times of emission of ultraviolet rays (number of times of emission) until curing is completed is measured.

In this experiment, used is ink of LF-140 clear type and LF-140 yellow type as a known UV curable ink that can be used in an ink-jet printer for UV curable ink manufactured by MIMAKI ENGINEERING CO., LTD. Among these types of ink, the ink of LF-140 clear type is ink of LF-140 type (colorless and transparent clear ink) not containing a pigment. In this case, the LF-140 clear type is a name for convenience indicating such ink. The LF-140 yellow is LF-140 type ink of yellow color (Y color). As a medium, a white PET sheet is used. The ink is applied to the medium by performing solid printing by using the ink-jet head.

A film thickness of the ink formed on the medium is varied among 20 µm, 35 µm, and 55 µm. The peak value (supply current value) of the pulse current in a case of turning on the UV LED by pulse driving is varied among 100 mA, 200 mA, and 300 mA to 700 mA. A pulse frequency is varied among 200 Hz, 400 Hz, 600 Hz, 800 Hz, and 1000 Hz. Duty of the pulse is varied among 8%, 10%, 13%, 17%, 20%, 25%, 33%, 40%, 50%, 60%, 67%, and 80%. A gap of a lamp is 2 mm. Moving speed of the slider (slider speed) is 296 mm/s (98% setting). As a luminous intensity measuring machine for measuring luminous intensity, used was an illuminometer manufactured by Hamamatsu Photonics K. K.

In this experiment, measurement is performed in a state in which the UV LED is continuously lit before pulse driving is performed on the UV LED. FIG. 3 illustrates a continuous lighting result (previous result) as an experiment result in a case in which the UV LED corresponding to the UV light source is continuously lit. FIG. 3A illustrates a luminous intensity measurement result and a rough estimation result of an integrated amount of light. FIG. 3B illustrates a relation between the current supplied to the UV LED and luminous intensity. FIG. 3C illustrates a relation between the current supplied to the UV LED and an integrated amount of light per once. FIG. 3D illustrates a correspondence between the condition for emitting ultraviolet rays and generation of creases.

As described above, in a case in which the UV LED is continuously lit, a problem of overheating tends to be caused. Thus, in this experiment, the current supplied to the UV LED is caused to be equal to or smaller than 500 mA.

As can be seen from the result illustrated in the drawing, when the current value supplied to the UV LED is small, the number of times of emission of ultraviolet rays until curing is completed is increased. This is because, for example, an integrated amount of ultraviolet rays equal to or larger than a predetermined amount need to be emitted to complete curing of the ink.

Regarding a state after curing, for example, creases tend to be generated in a case in which the film thickness of the ink is large. This may be because, for example, when the film thickness is large, influence tends to be caused such that the curing manner (progress of curing and the like) varies between the surface and the inside of the layer of the ink.

Regarding difference in colors of the ink, for example, the creases tend to be generated in a case of using the ink of yellow color as compared with a case of using the clear ink. Inclusively considering other colors in addition to the colors illustrated in the drawing, in a result of the experiment performed by the inventors of the present invention, the creases are the most hardly generated in a case of using the clear ink, and the creases are the most easily generated in a case of using the ink of yellow color. Such a difference is caused because a component (especially, a coloring agent such as a pigment) is different for each color of the ink, for example.

The creases are the most hardly generated in a case of the clear color because ultraviolet rays are easily transmitted to the inside of the layer of the ink, for example. Thus, to prevent the creases from being generated, for example, it may be preferable to emit strong ultraviolet rays so that ultraviolet rays reach the inside of the layer of the ink more appropriately.

Subsequently, the following describes a result of the experiment in a case of turning on the UV LED by pulse driving. FIGs. 4 to 7 illustrate the result of the experiment in a case of turning on the UV LED by pulse driving.

FIG. 4 illustrates an experiment result in a case of emitting ultraviolet rays while causing the peak value (supply current value) of the pulse current to be 700 mA. FIG. 4A illustrates a measurement result of luminous intensity and a rough estimation result of an integrated amount of light in a case in which duty and a frequency in pulse driving are variously changed. FIG. 4B is a graph illustrating a relation between the duty and the luminous intensity. FIG. 4C is a graph illustrating a relation between the frequency and the luminous intensity.

FIG. 5 illustrates an experiment result in a case of emitting ultraviolet rays while causing the peak value (supply current value) of the pulse current to be 500 mA. FIG. 5A illustrates a measurement result of luminous intensity and a rough estimation result of an integrated amount of light in a case in which duty and a frequency in pulse driving are variously changed. FIG. 5B is a graph illustrating a relation between the duty and the luminous intensity. FIG. 5C is a graph illustrating a relation between the frequency and the luminous intensity.

FIG. 6 illustrates a correspondence between the condition for emitting ultraviolet rays and generation of the creases. FIG. 6A illustrates an experiment result in a case in which the peak value of the pulse current is caused to be 700 mA. FIG. 6B illustrates an experiment result in a case in which the peak value of the pulse current is caused to be 500 mA. FIG. 7 illustrates experiment results under various conditions so that comparison can be performed by aligning rough estimation results of the integrated amount of light.

As can be seen from the experiment result described above, in a case of using the clear ink, the layer of the ink can be cured without generating creases for all film thicknesses from 20 µm to 55 µm. From these results, it can be understood that the creases may be prevented from being generated by increasing the current value.

The luminous intensity illustrated as the experiment result in the drawing is average luminous intensity per unit time. Thus, in a case of performing pulse driving, when the duty is small, the luminous intensity is lowered in accordance with the duty. However, to prevent the creases from being generated, it is important to increase the luminous intensity at the time of lighting instead of average luminous intensity. Thus, it is desirable to increase the current supplied to the UV LED at the time of lighting.

In a range of the experiment result illustrated in the drawing, in a case of using the ink of yellow color, when the film thickness of the ink is caused to be equal to or larger than 35 µm, creases are generated in both of a case in which the UV LED is continuously lit and a case in which pulse driving is performed. However, based on a result of further experiment performed by the inventors of the present invention and an examination result, creases can be appropriately prevented from being generated even in a case of using the ink of yellow color by increasing the current value that is supplied at the time of lighting of the UV LED. In this case, by performing pulse driving, a large current can be appropriately supplied to the UV LED while preventing overheating of the UV LED.

Focusing only on the experiment result illustrated in the drawing, it seems that creases are similarly generated when the integrated amount of light is the same. However, as described above, when the UV LED is caused to continuously emit strong ultraviolet rays, a problem and the like of overheating of the UV LED are caused. In a case of continuously emitting weak ultraviolet rays, time for reaching a required integrated amount of light is largely increased. As a result, building speed of the object is lowered, and efficiency of building the object is significantly deteriorated. In a case of emitting weak ultraviolet rays, ultraviolet rays do not sufficiently reach the inside of the layer of the ink in some cases. As a result, the layer of the ink cannot be appropriately cured even when the integrated amount of light is increased in some cases. On the other hand, in a case of turning on the UV LED by pulse driving, the layer of the ink can be more appropriately cured while appropriately preventing such problems from being caused. Due to this, the object can be efficiently built with higher accuracy.

### Industrial Applicability

The present invention can be preferably applied to a building apparatus, for example.

## Claims

1. A building apparatus (10) for building an object (50) using a curable material that is cured by being irradiated with ultraviolet rays, the building apparatus (10) comprising:
an ejection head (202), configured to eject the curable material;
a UV light source, configured to emit ultraviolet rays to the curable material ejected from the ejection head (202); and
a light source driver (22), configured to supply electric power for driving the UV light source, wherein
the UV light source is an ultraviolet LED, UV LED, and
the light source driver (22) is configured to supply the electric power that varies in a pulse-like form to the UV light source to drive the UV light source using a pulse driving scheme,
wherein if an upper limit of a rated temperature of the ultraviolet LED is defined as a rated upper limit temperature, and a peak value of a pulse current flowing in the ultraviolet LED in accordance with electric power supplied from the light source driver (22) is defined as a supply current value, the supply current value is set to such a value that the temperature of the ultraviolet LED does not exceed the rated upper limit temperature in a case of supplying electric power in the pulse-like form from the light source driver (22) to the ultraviolet LED, and the temperature of the ultraviolet LED would exceed the rated upper limit temperature if a current of the supply current value were continuously supplied to the ultraviolet LED; and
the building apparatus (10) comprises a plurality of ejection heads (202),
wherein the respective ejection heads (202) are configured to eject curable material of different colors.

2. The building apparatus (10) according to claim 1, wherein the building apparatus (10) is configured to build the object (50) by additive manufacturing by depositing a plurality of layers of the curable material cured with ultraviolet rays emitted from the UV light source.

3. The building apparatus (10) according to claim 1 or 2, wherein the ejection head (202) is configured to eject droplets of the curable material using an ink-jet scheme.

4. The building apparatus (10) according to any of claims 1 to 3, further comprising:
a main scanning driver (16), configured to cause the ejection head (202) to perform a main scanning operation of ej ecting the droplets of the curable material while moving in a main scanning direction set in advance, wherein
the UV light source emits ultraviolet rays to the curable material ejected by the ejection head (202) while moving together with the ejection head (202) at the time of the main scanning operation.

5. The building apparatus (10) according to any of claims 1 to 4, wherein,
if the peak value of the pulse current flowing in the ultraviolet LED in accordance with electric power supplied from the light source driver (22) is defined as a supply current value,
the supply current value is set to be a value such that the temperature of the ultraviolet LED does not exceed 80°C in a case of supplying electric power in the pulse-like form from the light source driver (22) to the ultraviolet LED, and the temperature of the ultraviolet LED would exceed 80°C if a current of the supply current value were continuously supplied to the ultraviolet LED.

6. The building apparatus (10) according to any of claims 1 to 5, wherein
the ejection head (202) ejects the curable material at least based on data indicating a shape of the object (50), and
the UV light source at least irradiates, with ultraviolet rays, the entire surface of a region to which the curable material is ejected by the ejection head (202).

7. The building apparatus (10) according to any of claims 1 to 6, wherein the light source driver (22) drives the UV light source using a pulse driving scheme of performing pulse width modulation.

8. The building apparatus (10) according to any of claims 1 to 6, wherein the light source driver (22) drives the UV light source using a pulse driving scheme of performing pulse number modulation.

9. A building method of building an object (50) using a curable material that is cured by being irradiated with ultraviolet rays, using:
an ejection head (202), configured to eject the curable material;
a UV light source, configured to emit ultraviolet rays to the curable material ejected from the ejection head (202); and
a light source driver (22), configured to supply electric power for driving the UV light source, wherein
the UV light source is an ultraviolet LED, and
the light source driver (22) supplies the electric power that varies in a pulse-like form to the UV light source to drive the UV light source using a pulse driving scheme;
wherein if an upper limit of a rated temperature of the ultraviolet LED is defined as a rated upper limit temperature, and a peak value of a pulse current flowing in the ultraviolet LED in accordance with electric power supplied from the light source driver (22) is defined as a supply current value, the supply current value is set to such a value that the temperature of the ultraviolet LED does not exceed the rated upper limit temperature in a case of supplying electric power in the pulse-like form from the light source driver (22) to the ultraviolet LED, and the temperature of the ultraviolet LED would exceed the rated upper limit temperature if a current of the supply current value were continuously supplied to the ultraviolet LED; and
the object (50) is built using a plurality of ejection heads (202),
wherein the respective ejection heads (202) eject curable material of different colors.

## Patentansprüche

1. Bauvorrichtung (10) zum Bauen eines Objekts (50) unter Verwendung eines härtbaren Materials, das durch Bestrahlung mit ultravioletten Strahlen gehärtet wird, wobei die Bauvorrichtung (10) Folgendes aufweist:
einen Ausstoßkopf (202), der eingerichtet ist, das härtbare Material auszustoßen;
eine UV-Lichtquelle, die eingerichtet ist, ultraviolette Strahlen auf das von dem Ausstoßkopf (202) ausgestoßene härtbare Material zu emittieren; und
einen Lichtquellentreiber (22), der eingerichtet ist, elektrische Leistung zum Betreiben der UV-Lichtquelle zuzuführen, wobei
die UV-Lichtquelle eine Ultraviolett-LED, UV-LED, ist, und
der Lichtquellentreiber (22) eingerichtet ist, eine elektrische Leistung, die in einer pulsartigen Form variiert, der UV-Lichtquelle zuzuführen, um die UV-Lichtquelle unter Verwendung eines Pulsbetriebsschemas zu betreiben,
wobei, wenn eine obere Grenze einer Nenntemperatur der Ultraviolett-LED als eine obere Nenngrenztemperatur definiert ist, und ein Spitzenwert eines Pulsstroms, der in der Ultraviolett-LED gemäß der von dem Lichtquellentreiber (22) zugeführten elektrischen Leistung fließt, als ein Zuführstromwert definiert ist, der Zuführstromwert auf einen solchen Wert eingestellt ist, dass die Temperatur der Ultraviolett-LED die obere Nenngrenztemperatur in einem Fall des Zuführens von elektrischer Leistung in der pulsartigen Form von dem Lichtquellentreiber (22) zu der Ultraviolett-LED nicht überschreitet, und die Temperatur der Ultraviolett-LED die obere Nenngrenztemperatur überschreiten würde, wenn ein Strom des Zuführstromwerts kontinuierlich der Ultraviolett-LED zugeführt würde; und
die Bauvorrichtung (10) mehrere Ausstoßköpfe (202) aufweist,
wobei die jeweiligen Ausstoßköpfe (202) eingerichtet sind, härtbares Material unterschiedlicher Farben auszustoßen.

2. Bauvorrichtung (10) nach Anspruch 1, wobei die Bauvorrichtung (10) eingerichtet ist, das Objekt (50) durch additive Fertigung durch Abscheiden mehrerer Schichten des mit von der UV-Lichtquelle emittierten ultravioletten Strahlen gehärteten härtbaren Materials zu bauen.

3. Bauvorrichtung (10) nach Anspruch 1 oder 2, wobei der Ausstoßkopf (202) eingerichtet ist, Tröpfchen des härtbaren Materials unter Verwendung eines Tintenstrahlverfahrens auszustoßen.

4. Bauvorrichtung (10) nach einem der Ansprüche 1 bis 3, die ferner Folgendes aufweist:
einen Hauptabtasttreiber (16), der eingerichtet ist, den Ausstoßkopf (202) zu veranlassen, einen Hauptabtastvorgang des Ausstoßens der Tröpfchen des härtbaren Materials auszuführen, während er sich in einer im Voraus festgelegten Hauptabtastrichtung bewegt, wobei
die UV-Lichtquelle ultraviolette Strahlen auf das von dem Ausstoßkopf (202) ausgestoßene härtbare Material emittiert, während sie sich zum Zeitpunkt des Hauptabtastvorgangs zusammen mit dem Ausstoßkopf (202) bewegt.

5. Bauvorrichtung (10) nach einem der Ansprüche 1 bis 4, wobei
wenn der Spitzenwert des Pulsstroms, der in der Ultraviolett-LED gemäß der von dem Lichtquellentreiber (22) zugeführten elektrischen Leistung fließt, als ein Zuführstromwert definiert ist,
der Zuführstromwert auf einen solchen Wert eingestellt ist, dass die Temperatur der Ultraviolett-LED 80°C in einem Fall des Zuführens von elektrischer Leistung in der pulsartigen Form von dem Lichtquellentreiber (22) zu der Ultraviolett-LED nicht überschreitet, und die Temperatur der Ultraviolett-LED 80°C überschreiten würde, wenn ein Strom des Zuführstromwerts kontinuierlich der Ultraviolett-LED zugeführt würde.

6. Bauvorrichtung (10) nach einem der Ansprüche 1 bis 5, wobei
der Ausstoßkopf (202) das härtbare Material zumindest basierend auf Daten, die eine Form des Objekts (50) angeben, ausstößt, und
die UV-Lichtquelle zumindest die gesamte Oberfläche eines Bereichs, auf den das härtbare Material von dem Ausstoßkopf (202) ausgestoßen wird, mit ultravioletten Strahlen bestrahlt.

7. Bauvorrichtung (10) nach einem der Ansprüche 1 bis 6, wobei der Lichtquellentreiber (22) die UV-Lichtquelle unter Verwendung eines Pulsbetriebsschemas zum Durchführen einer Pulsbreitenmodulation betreibt.

8. Bauvorrichtung (10) nach einem der Ansprüche 1 bis 6, wobei der Lichtquellentreiber (22) die UV-Lichtquelle unter Verwendung eines Pulsbetriebverfahrens zum Durchführen einer Pulszahlmodulation betreibt.

9. Bauverfahren zum Bauen eines Objekts (50) unter Verwendung eines härtbaren Materials, das durch Bestrahlung mit ultravioletten Strahlen gehärtet wird, unter Verwendung:
eines Ausstoßkopfs (202), der eingerichtet ist, das härtbare Material auszustoßen;
einer UV-Lichtquelle, die eingerichtet ist, ultraviolette Strahlen auf das von dem Ausstoßkopf (202) ausgestoßene härtbare Material zu emittieren; und
eines Lichtquellentreibers (22), der eingerichtet ist, elektrische Leistung zum Betreiben der UV-Lichtquelle zuzuführen, wobei
die UV-Lichtquelle eine Ultraviolett-LED ist, und
der Lichtquellentreiber (22) die elektrische Leistung, die in einer pulsartigen Form variiert, der UV-Lichtquelle zuführt, um die UV-Lichtquelle unter Verwendung eines Pulsbetriebsschemas zu betreiben;
wobei, wenn eine obere Grenze einer Nenntemperatur der Ultraviolett-LED als eine obere Nenngrenztemperatur definiert ist, und ein Spitzenwert eines Pulsstroms, der in der Ultraviolett-LED gemäß der von dem Lichtquellentreiber (22) zugeführten elektrischen Leistung fließt, als ein Zuführstromwert definiert ist, der Zuführstromwert auf einen solchen Wert eingestellt ist, dass die Temperatur der Ultraviolett-LED die obere Nenngrenztemperatur in einem Fall des Zuführens von elektrischer Leistung in der pulsartigen Form von dem Lichtquellentreiber (22) zu der Ultraviolett-LED nicht überschreitet, und die Temperatur der Ultraviolett-LED die obere Nenngrenztemperatur überschreiten würde, wenn ein Strom des Zuführstromwerts kontinuierlich der Ultraviolett-LED zugeführt würde; und
das Objekt (50) unter Verwendung mehrerer Ausstoßköpfe (202) gebaut wird,
wobei die jeweiligen Ausstoßköpfe (202) härtbares Material unterschiedlicher Farben ausstoßen.

## Revendications

1. Appareil de construction (10) pour construire un objet (50) en utilisant un matériau durcissable qui est durci en étant irradié avec des rayons ultraviolets, l'appareil de construction (10) comprenant :
une tête d'éjection (202), configurée pour éjecter le matériau durcissable ;
une source de lumière UV, configurée pour émettre des rayons ultraviolets vers le matériau durcissable éjecté par la tête d'éjection (202) ; et
un pilote de source de lumière (22), configuré pour fournir de l'énergie électrique pour piloter la source de lumière UV, dans lequel
la source de lumière UV est une LED ultraviolette, LED UV, et
le pilote de source de lumière (22) est configuré pour fournir l'énergie électrique qui varie sous une forme de type impulsion à la source de lumière UV pour piloter la source de lumière UV en utilisant un schéma de pilotage d'impulsion,
dans lequel si une limite supérieure d'une température nominale de la LED ultraviolette est définie comme une température de limite supérieure nominale, et une valeur de crête d'un courant d'impulsion circulant dans la LED ultraviolette conformément à l'énergie électrique fournie par le pilote de source de lumière (22) est définie comme une valeur de courant d'alimentation, la valeur de courant d'alimentation est fixée à une valeur telle que la température de la LED ultraviolette ne dépasse pas la température de limite supérieure nominale dans un cas de fourniture d'énergie électrique sous la forme de type impulsion par le pilote de source de lumière (22) à la LED ultraviolette, et la température de la LED ultraviolette dépasserait la température de limite supérieure nominale si un courant de la valeur de courant d'alimentation était fourni en continu à la LED ultraviolette ; et
l'appareil de construction (10) comprend une pluralité de têtes d'éjection (202),
dans lequel les têtes d'éjection respectives (202) sont configurées pour éjecter un matériau durcissable de différentes couleurs.

2. Appareil de construction (10) selon la revendication 1, dans lequel l'appareil de construction (10) est configuré pour construire l'objet (50) par fabrication additive en déposant une pluralité de couches du matériau durcissable durci avec des rayons ultraviolets émis par la source de lumière UV.

3. Appareil de construction (10) selon la revendication 1 ou 2, dans lequel la tête d'éjection (202) est configurée pour éjecter des gouttelettes du matériau durcissable en utilisant un schéma à jet d'encre.

4. Appareil de construction (10) selon l'une quelconque des revendications 1 à 3, comprenant en outre :
un pilote de balayage principal (16), configuré pour amener la tête d'éjection (202) à effectuer une opération de balayage principal consistant à éjecter les gouttelettes du matériau durcissable tout en se déplaçant dans une direction de balayage principal établie à l'avance, dans lequel
la source de lumière UV émet des rayons ultraviolets vers le matériau durcissable éjecté par la tête d'éjection (202) tout en se déplaçant conjointement avec la tête d'éjection (202) au moment de l'opération de balayage principal.

5. Appareil de construction (10) selon l'une quelconque des revendications 1 à 4, dans lequel,
si la valeur de crête du courant d'impulsion circulant dans la LED ultraviolette conformément à l'énergie électrique fournie par le pilote de source de lumière (22) est définie comme une valeur de courant d'alimentation,
la valeur de courant d'alimentation est fixée à une valeur telle que la température de la LED ultraviolette ne dépasse pas 80 °C dans un cas de fourniture d'énergie électrique sous la forme de type impulsion par le pilote de source de lumière (22) à la LED ultraviolette, et la température de la LED ultraviolette dépasserait 80 °C si un courant de la valeur de courant d'alimentation était fourni en continu à la LED ultraviolette.

6. Appareil de construction (10) selon l'une quelconque des revendications 1 à 5, dans lequel
la tête d'éjection (202) éjecte le matériau durcissable au moins sur la base de données indiquant une forme de l'objet (50), et
la source de lumière UV irradie au moins, avec des rayons ultraviolets, la surface entière d'une région vers laquelle le matériau durcissable est éjecté par la tête d'éjection (202).

7. Appareil de construction (10) selon l'une quelconque des revendications 1 à 6, dans lequel le pilote de source de lumière (22) pilote la source de lumière UV en utilisant un schéma de pilotage d'impulsion consistant à effectuer une modulation de largeur d'impulsion.

8. Appareil de construction (10) selon l'une quelconque des revendications 1 à 6, dans lequel le pilote de source de lumière (22) pilote la source de lumière UV en utilisant un schéma de pilotage d'impulsion consistant à effectuer une modulation de nombre d'impulsions.

9. Procédé de construction pour construire un objet (50) en utilisant un matériau durcissable qui est durci en étant irradié avec des rayons ultraviolets, en utilisant :
une tête d'éjection (202), configurée pour éjecter le matériau durcissable ;
une source de lumière UV, configurée pour émettre des rayons ultraviolets vers le matériau durcissable éjecté par la tête d'éjection (202) ; et
un pilote de source de lumière (22), configuré pour fournir de l'énergie électrique pour piloter la source de lumière UV, dans lequel
la source de lumière UV est une LED ultraviolette, et
le pilote de source de lumière (22) fournit l'énergie électrique qui varie sous une forme de type impulsion à la source de lumière UV pour piloter la source de lumière UV en utilisant un schéma de pilotage d'impulsion ;
dans lequel si une limite supérieure d'une température nominale de la LED ultraviolette est définie comme une température de limite supérieure nominale, et une valeur de crête d'un courant d'impulsion circulant dans la LED ultraviolette conformément à l'énergie électrique fournie par le pilote de source de lumière (22) est définie comme une valeur de courant d'alimentation, la valeur de courant d'alimentation est fixée à une valeur telle que la température de la LED ultraviolette ne dépasse pas la température de limite supérieure nominale dans un cas de fourniture d'énergie électrique sous la forme de type impulsion par le pilote de source de lumière (22) à la LED ultraviolette, et la température de la LED ultraviolette dépasserait la température de limite supérieure nominale si un courant de la valeur de courant d'alimentation était fourni en continu à la LED ultraviolette ; et
l'objet (50) est construit en utilisant une pluralité de têtes d'éjection (202),
dans lequel les têtes d'éjection respectives (202) éjectent un matériau durcissable de différentes couleurs.
